# EUROPEAN PATENT SPECIFICATION

(11) **EP 2 913 545 B1**
(45) Date of publication and mention of the grant of the patent: **19.04.2017**
(21) Application number: 13849445.5
(22) Date of filing: 21.10.2013
(51) Int. Cl.: F16C 29/06, F16C 33/66, F16C 29/08

(54) **LINEAR MOTION GUIDE DEVICE**
FÜHRUNGSVORRICHTUNG FÜR LINEARBEWEGUNGEN
DISPOSITIF DE GUIDAGE DE MOUVEMENT LINÉAIRE

(30) Priority: 23.10.2012 JP 2012233748
(43) Date of publication of application: 02.09.2015
(73) Proprietor: NSK Ltd., Tokyo 141-8560 (JP)
(72) Inventor: MATSUMOTO, Jun, Fujisawa-shi Kanagawa 252-0811 (JP)
(74) Representative: Klingseisen, Franz
(86) International application number: PCT/JP2013/006216
(87) International publication number: WO 2014/064917

(56) References cited:
- DE-A1- 19 923 719
- JP-A- 2002 048 137
- JP-A- 2004 316 762
- JP-A- 2004 316 762
- JP-A- 2011 241 915
- JP-A- 2012 092 887
- MENSEL M: "LINEARES FUEHRUNGSPRINZIP SETZT SICH DURCH", WERKSTATT + BETRIEB, CARL HANSER VERLAG, MÜNCHEN DE, vol. 134, no. 4, 4 April 2001 (2001-04-04) , pages 46-48, XP001071510, ISSN: 0043-2792

## Description

### Technical Field

The present disclosure relates to a linear guide device used in a machine tool, a semiconductor manufacturing device, a conveyer, or the like, as a machine for guiding an obj ect which linearly moves.

### Background Art

As a conventional example of a linear guide device used in a machine tool or the like, for example, the linear guide device described in PTL 1 is known. The linear guide device includes a guide rail, a slider, and plural rolling elements. The guide rail has rolling element rolling surfaces (rail-side rolling surface) extending in a longitudinal direction on an outer surface of the guide rail. The slider has rolling element rolling surfaces (slider-side rolling surface) formed to face the rolling element rolling surfaces of the guide rail, respectively, and straddles on the guide rail via the rolling elements, in a manner able to move relatively in the longitudinal direction of the guide rail.

The slider includes a slider body on which the slider-side rolling surfaces are formed and end caps attached to both end faces in the movement direction of the slider body, respectively. A side seal is attached to a surface of the end cap, on the opposite side to the slider body. The side seal includes a seal lip in contact with the outer surface of the guide rail including the rail-side rolling surfaces in a slidably manner to close a gap formed between the outer surface of the guide rail and the slider.

The plural rolling elements are rollably arranged in a rolling element circulation passage including a loaded rolling channel formed with the rail-side rolling surface and the slider-side rolling surface, and a return passage and a direction change passage which are formed in the slider. Furthermore, a lubricant such as grease or the like is disposed in the rolling element circulation passage.

In the linear guide device having such a configuration, the seal lip slides while being in contact with the outer surface of the guide rail including the rail-side rolling surface when the slider and the guide rail relatively move. Thus, a foreign matter such as dusts is prevented from entering between the outer surface of the guide rail and the slider body, especially between the rail-side rolling surface and the slider body to maintain a good operation performance of the linear guide device.

In the linear guide device descried in PTL 1, however, the lubricant disposed in the loaded rolling channel may be leak outside the slider as the linear guide device is used. Therefore, the ambient environment may be contaminated by the lubricant leaked outside the slider.

As a measure for this problem, for example, PTL 2 describes that two seal lips separated from each other in the movement direction of the slider body are provided.

The linear guide device described in PTL 2 can hold the lubricant, which leaks outside the slider from the loaded rolling channel, in a space formed between the two seal lips separated from each other in the movement direction of the slider.

In the linear guide device described in PTL 2, however, it is hard to return the lubricant held in the space formed between the two seal lips to the loaded rolling channel. Therefore, in a case where the lubricant in the loaded rolling channel dries up, such as a case where the linear guide device is used over a long period, a lubrication failure may occur.

Furthermore, in the linear guide device described in PTL 2, the seal lip closer to the slider body out of the two seal lips is less deformed to the slider body, even when an external force is applied when using the linear guide device. Therefore, the seal lip closer to the slider body may cure early and degrade earlier.

A measure for this problem is described in PTL 3, for example. The linear guide device described in PTL 3 includes two spaces arranged in the movement direction of the slider in the end cap. Furthermore, the two space is formed by a flexible material (natural rubber, synthetic rubber, elastomeric plastic, or the like), and is partitioned by a wall face forming portion having a seal lip. Thus, the lubricant is sealed in the space farther from the slider body out of the two spaces. When the pressure in this space rises, the lubricant is sealed in the space closer to the slider body.

Therefore, in the linear guide device described in PTL 3, it is possible to suppress the lubrication failure as well as the degradation of the seal lip.

In a further prior art according to DE 199 23 719 A1, a linear guide device is disclosed, having a plurality of rolling elements arranged in a guide rail and a side seal including a seal lip, which is provided in such a manner that a reception space is closer to a slider of the guide element than the seal lip. The reception space is provided on a front side of a mounting body such that the guide rail bodies can be mounted from an open front side of the main body of the linear guide device.

### Citation List

### Patent Literature

PTL 1: JP 2012-041987 A
PTL 2: JP 2004-316762 A
PTL 3: JP 2002-048137 A

### Summary of Invention

### Technical Problem

In the linear guide device described in PTL 3, however, the wall face forming portion partitioning the two spaces is formed of the flexible material. Therefore, the wall face forming portion is bent as the slider moves and the volumes of the spaces vary. When the volumes of the spaces vary to decrease in this way, the lubricant sealed in the space may be forced to leak outside the slider to contaminate the ambient environment.

The present disclosure has an object to provide a linear guide device capable of suppressing the leakage of the lubricant outside the slider and the contamination of the ambient environment.

### Solution to Problem

This problem is solved by means of a linear guide device according to claim 1.

### (First Aspect)

In order to address the above-mentioned problem, a linear guide device according to the first aspect is characterized by including the following constitution (a), constitution (b), and constitution (c).
(a) The linear guide device includes a guide rail, a slider, and a plurality of rolling elements. The guide rail and the slider include rolling surfaces, respectively, at positions facing with each other, the rolling surfaces forming a rolling channel for the plurality of rolling elements. The both rolling surfaces extend in a longitudinal direction of the guide rail. The slider is arranged on the guide rail via the plurality of rolling elements in a manner able to move relatively in the longitudinal direction. Side seals are attached to both end sides of the slider in a movement direction. Each of the side seals includes a seal lip in contact with an outer surface of the guide rail including a rail-side rolling surface which is the rolling surface, in a slidably manner.
(b) The linear guide device includes a side seal-side space which is arranged to be closer to the slider than the seal lip and communicates with a gap formed between the slider and the rail-side rolling surface.
(c) Deformation of the side seal-side space in the movement direction of the slider is suppressed.

The constitution (c) is synonymous with "the linear guide device includes a space deformation suppressing portion configured to suppress the deformation of the side seal-side space in the movement direction of the slider".

The linear guide device according to the first aspect can move the lubricant extruded from the gap formed between the slider and the rail-side rolling surface into the side seal-side space. Furthermore, it is possible to suppress the leakage of the lubricant existing in the side seal-side space outside the slider by the seal lip.

The linear guide device according to the first aspect may have any of the following constitution (1), constitution (2), or constitution (3).
(1) The side seal includes a spacer plate including a space forming depression portion forming the side seal-side space, and a seal member including the seal lip. The spacer plate is interposed between the seal member and the slider. The seal member includes a lip member on which the seal lip is formed, and a seal plate body on which a lip member fitting depression portion fitting to the lip member is formed. The space forming depression portion of the spacer plate and the seal plate body suppress the deformation of the side seal-side space in the movement direction of the slider.
(2) The side seal includes a seal member including the seal lip, and a spacer plate interposed between the seal member and the slider to form the side seal-side space. The seal member includes a lip member on which the seal lip is formed, and a seal plate body on which a lip member fitting depression portion fitting to the lip member is formed. The slider, the spacer plate, and the seal plate body suppress the deformation of the side seal-side space in the movement direction of the slider.
(3) The side seal includes a seal member including the seal lip. The seal member includes a lip member on which the seal lip is formed, and a seal plate body on which a lip member fitting depression portion fitting to the lip member is formed. The seal plate body includes a space forming depression portion forming the side seal-side space. The slider and the seal plate body suppress the deformation of the side seal-side space in the movement direction of the slider.

### (Second Aspect)

In a linear guide device according to the second aspect, in addition to the constitution of the linear guide device according to the first aspect, the side seal includes a plurality of seal members, each of which includes the seal lip, and the plurality of seal members are arranged in the movement direction of the slider.

The linear guide device according to the second aspect can suppress the entry of a foreign mater into a rolling element circulation passage through the gap between the slider and the rail-side rolling surface more effectively in comparison with a case where the side seal has an only single seal member.

In a linear guide device according to the invention, in addition to the Constitution of the linear guide device according to the first aspect or the second aspect, the side seal includes a seal member including the seal lip, and a spacer plate including a space forming depression portion forming the side seal-side space, and the spacer plate is interposed between the seal member and the slider.

In the linear guide device according to the invention, the side seal-side space is formed by the space forming depression portion of the spacer plate which is a plate-shaped member.

### (Third Aspect)

In a linear guide device according to the third aspect, in addition to the constitution of the linear guide device according to the invention, the seal member includes a lip member on which the seal lip is formed, and a seal plate body on which a lip member fitting depression portion fitting to the lip member is formed, and the spacer plate has the same shape as a shape of the seal plate body.

In the linear guide device according to the third aspect, the spacer plate and the seal plate body can be formed as common parts.

### (Fourth Aspect)

In a linear guide device according to the fourth aspect, in addition to the constitution of the linear guide device according to any one of the first to the third aspects, the side seal includes a seal member including the seal lip, the seal member includes a lip member on which the seal lip is formed, and a seal plate body on which a lip member fitting depression portion fitting to the lip member is formed, and a volume of the side seal-side space is larger than a volume of the lip member fitting depression portion.

The linear guide device according to the fourth aspect has the lager side seal-side space than that of a linear guide device in which the volume of the lip member fitting depression portion is the same as that of the linear guide device according to the fourth aspect, and the volume of the side seal-side space is the same as the volume of the lip member fitting depression portion. As a result, it is possible to hold more lubricant which is extruded from the gap formed between the slider and the rail-side rolling surface within the side seal-side space.

### (Fifth Aspect)

In a linear guide device according to the fifth aspect, in addition to the constitution of the linear guide device according to the first or the second aspect, the side seal includes a seal member including the seal lip, and the seal member including a space forming depression portion forming the side seal-side space.

In the linear guide device according to the fifth aspect, since the seal member includes the space forming depression portion, the number of components of the side seal can be reduced in comparison with the linear guide device according to the invention, the third, or the fourth aspect which needs a component for forming the space forming depression portion other the seal member.

### (Sixth Aspect)

In a linear guide device according to the sixth aspect, in addition to the constitution of the linear guide device according to any one of the first to the fifth aspects, at least any one of a volume of the side seal-side space or a length of the side seal-side space in the movement direction of the slider satisfies the following constitution (d).
(d) The volume or the length is set to a value in which a lubricant disposed in the side-seal-side space can move to the gap formed between the slider and the rail-side rolling surface by a relative movement between the guide rail and the slider.

Such a constitution can move the lubricant existing in the side seal-side space to the gap formed between the slider and the rail-side rolling surface as the linear guide device is used (operates).

### Advantageous Effects of Invention

According to the linear guide device of the embodiment, it is possible to suppress the leakage of the lubricant outside the slider and the contamination of the ambient environment.

### Brief Description of Drawings

FIG. 1 is a partial sectional perspective view of a linear guide device;
FIG. 2 is a front view illustrating a surface of an end cap included in a linear guide device, which faces a slider body;
FIG. 3 is a perspective view illustrating a side seal and an end cap included in linear guide device according to the first embodiment;
FIG. 4 is a perspective view illustrating a cover plate, a seal member, and a spacer plate included in the side seal of FIG. 3;
FIG.. 5 is an exploded perspective view illustrating the seal member of FIG 4;
FIG. 6 is a perspective view illustrating the shape of the seal member of FIG. 4;
FTG. 7 is a cross-sectional view illustrating an installation method of a side seal to a slider in a linear guide device according to the first embodiment;
FIG. 8 is a cross-sectional view illustrating operations and functions of a linear guide device according to the first embodiment;
FIG. 9 is a cross-sectional view illustrating a linear guide device as a comparative example;
FIG. 10 is a cross-sectional view illustrating a configuration, operations, and functions of a side seal in a linear guide device according to the second embodiment;
FIG. 11 is a cross-sectional view illustrating a configuration, operations, and functions of a side seal in a linear guide device according to an example not forming part of the invention;
FIG. 12 is a perspective view illustrating a spacer plate included in a side seal in a linear guide device according to the the example not forming part of the invention;
FIG. 13 is a cross-sectional view illustrating a configuration, operations, and functions of a side seal in a linear guide device according to an example not forming part of the invention;
FIG. 14 is a perspective view illustrating a spacer plate included in a side seal in a linear guide device according to an example not forming part of the invention; and
FIG. 15 is a perspective view illustrating a seal member included in a side seal when viewed from an end cap in a linear guide device according to an example not forming part of the invention.

### Description of Embodiments

### (First Embodiment)

Hereinafter, the first embodiment of the present invention will be described with reference to the drawings.

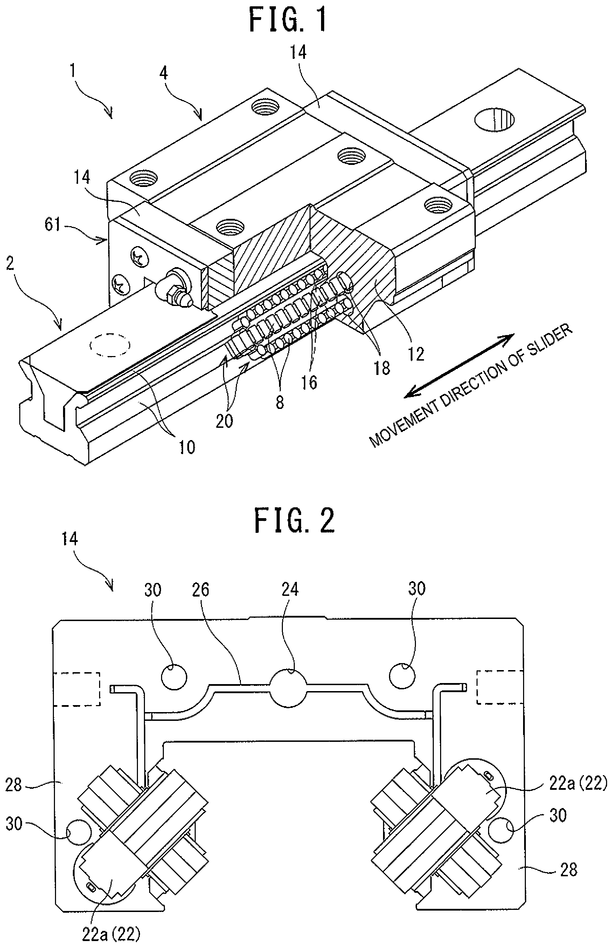

Firstly, a commonly used linear guide device (linear guide) 1 will be described by using FIG. 1 and FIG. 2. The commonly used linear guide device 1 includes a guide rail 2, a slider 4, and plural rolling elements 8

Two rail-side rolling surfaces 10 extending in a longitudinal direction of the guide rail 2 are formed on both of the left and right sides of the guide rail 2. The slider 4 is arranged on the guide rail 2 via the rolling elements 8 to be capable of moving relatively. The slider 4 includes leg portions arranged on the sides of the guide rail 2, a trunk portion coupling the both leg portions, a slider body 12, and end caps 14 attached to both end faces in the movement direction of the slider body 12, respectively.

The slider body 12 includes slider-side rolling surfaces 16 facing the rail-side rolling surfaces 10, on the both leg portions arranged on the sides of the guide rail 2, respectively, and rolling element return passages 18 penetrate through the both leg portions, respectively, in the movement direction of the slider body 12. The loaded rolling channels 20 of the rolling elements 8 are formed with the rail-side rolling surfaces 10 and the slider-side rolling surfaces 16.

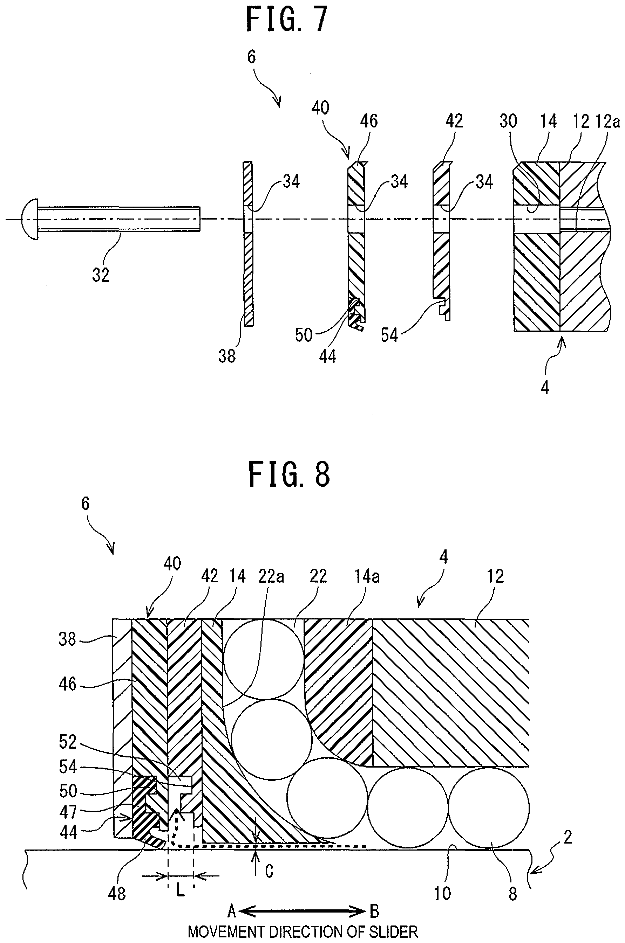

The end cap 14, as illustrated in FIG. 2, includes a direction change passage depression portions 22a, an oil supply opening 24, and an oil passage 26. The direction change passage depression portions 22a are formed in the both leg portions of the end cap 14, respectively. A direction change passage 22 is formed with the direction change passage depression portion 22a and a return guide 14a (see FIG. 8). The direction change passage 22 communicates the loaded rolling channel 20 and the rolling element return passage 18 to form a rolling element circulation passage of the rolling elements 8.

The oil supply opening 24 is formed on the center portion in the width direction of the end cap 14. The oil passage 26 communicates the oil supply opening 24 with the direction change passage depression portions 22a.. Attachment screw through holes 30 through which attachment screws penetrate are formed in the end cap 14

The end cap 14 is formed of material with less flexibility (rigid plastic, for example). The rigid plastic may be, for example, polyacetal, polyamide, or the like.

The side seals 61 are attached to the both ends in the movement direction of the slider 4. The side seal 61 is one plate-shaped member and includes a seal lip in contact with the outer surface of the guide rail 2 including the rail-side rolling surfaces 10 in a slidably manner.

The plural rolling elements 8 are rollably arranged in the rolling element circulation passage formed with the loaded rolling channel 20, the return passage 18, and the direction change passage 22 It is to be noted that, for example, cylindrical rollers are used for the rolling elements 8.

Furthermore, the lubricant such as grease or the like (not illustrated) is disposed in the rolling element circulation passage. The lubricant is supplied into the rolling element circulation passage from the oil supply opening 24 via the oil passage 26 by using a lubricant supplying instrument (a grease gun or the like).

Then, in the linear guide device 1, the slider 4 moves relative to the guide rail 2 via the plural rolling elements 8 rolling (moving while rotating) in the rolling element circulation passage At this time, the seal lip of the side seal 61 slides while being in contact with the outer surface of the guide rail 2 including the rail-side rolling surface 10.

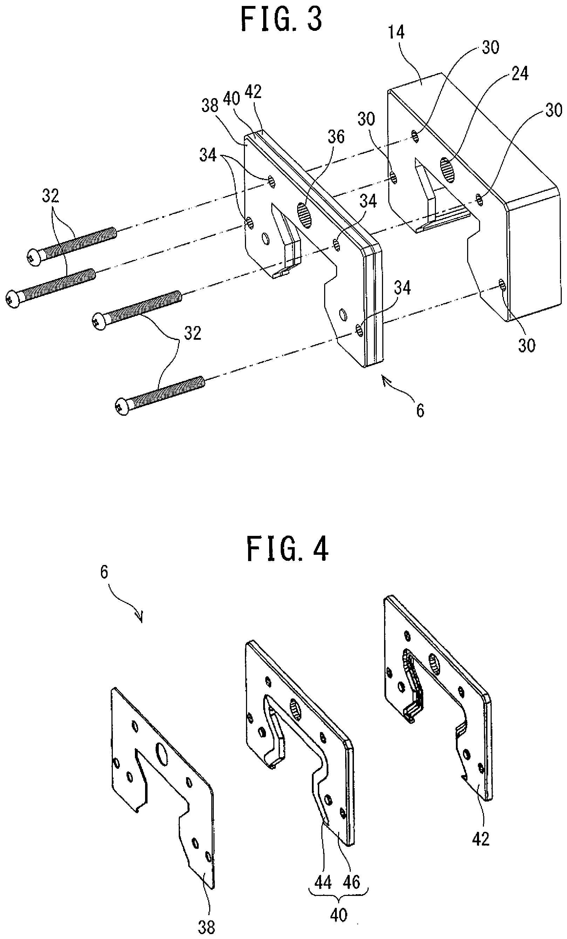

Next, the features of the linear guide device according to the first embodiment will be described by using FIG. 3 to FIG. 8

In the linear guide device according to the first embodiment, the side seal 6 described below is fixed to the slider 4, instead of the above-mentioned side seal 61. As to the other points, the linear guide device according to the first embodiment has the same constitution as that of the commonly used linear guide device 1.

As illustrated in FIG. 3, attachment screw through holes 34 through which attachment screws 32 penetrate, and an oil supply through hole 36 penetrating to the position corresponding to the oil supply opening 24, are formed in the side seal 6. It is to be noted that the side seal 6 is attached to the slider 4, in a state washers are interposed between the heads of the attachment screws 32 and the attachment screw through holes 34

Furthermore, as illustrated in FIG. 3 and FIG. 4, the side seal 6 includes a cover plate 38, a seal member 40 and a spacer plate 42. The seal member 40 is arranged between the cover plate 38 and the spacer plate 42. Each of the cover plate 38, the seal member 40 and the spacer plate 42 are formed in a substantially lateral U-shape corresponding to the end cap 14.

The cover plate 38 is a substantially lateral U-shape plate-shaped member, and is formed of material with low (less) flexibility, such as steel, for example. The cover plate 38 is arranged at a position distant from the end cap 14 more than the seal member 40 and the spacer plate 42

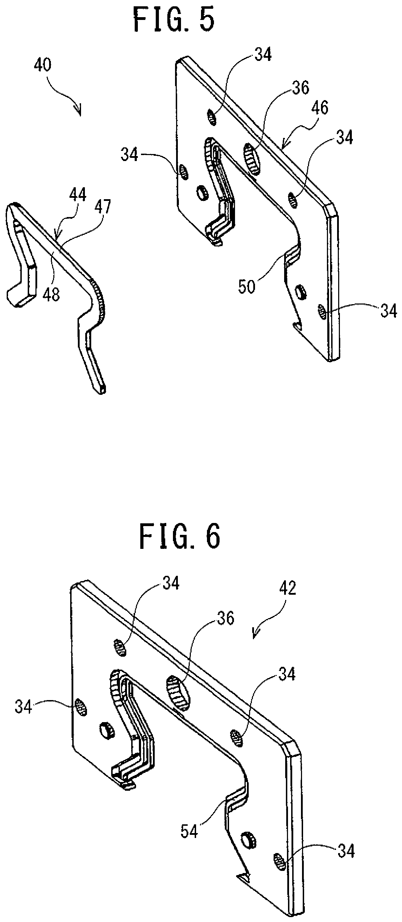

The seal member 40 includes a lip member 44 and a seal plate body 46, as illustrated in FIG. 5.

The shape of the seal plate body 46 when viewed in the movement direction of the slider 4 is the same to that of the end cap 14. A lip member fitting depression portion 50 to which the lip member 44 is fitted is formed on the side of the seal plate body 46 on which the guide rail 2 is arranged.

Furthermore, the seal plate body 46 is formed of material with less flexibility (rigid plastic, for example), similarly to the end cap 14. The rigid plastic may be, for example, polyester, polyacetal, polyamide, or the like.

The lip member 44 has a shape corresponding to the side face and the top face of the guide rail 2. The outside portion of the lip member 44 is a fitting portion 47 fitting to the lip member fitting depression portion 50 of the seal plate body 46. The inside portion of the lip member 44 is a seal lip 48 in contact with the outer surface of the guide rail 2 including the rail-side rolling surfaces 10 in a slidably manner.

Furthermore, the seal lip 48 has a shape in which a portion closer to the slider 4 comes closer to the outer surface of the guide rail 2, in a state where the lip member 44 is attached to the slider 4. That is, the seal lip 48 is an inwardly extending lip. The seal lip 48 close a gap formed between the outer surface of the guide rail 2 and the slider 4, when viewed in the movement direction of the slider 4.

The lip member 44 is formed of rubber, thermoplastic elastomer, or the like, for example. The thermoplastic elastomer may be, for example, a polyester-based elastomer, a polyacetal-based elastomer, a polyamide-based elastomer, or the like,

The spacer plate 42 is the same shape as that of the seal plate body 46, as illustrated in FIG. 6. The spacer plate 42 has a space forming depression portion 54 of the same shape as that of the lip member fitting depression portion 50. The lip member 44 is not fitted to the space forming depression portion 54.

Furthermore, as illustrated in FIG.. 7, the spacer plate 42 is arranged at a position closer to the end cap 14 than the cover plate 38 and the seal member 40. That is, the spacer plate 42 is interposed between the seal member 40 and the slider 4.

The side seal 6 is fixed to the slider 4 with the attachment screws 32, as illustrated in FIG. 7. Attachment screw fastening holes 12a on which the attachment screws are threadably mounted are formed in the slider body 12. The attachment screw through holes 34 through which the attachment screws 32 are inserted are formed in the spacer plate 42, the cover plate 38, and the seal member 40 included in the side seal 6.

That is, when attaching the side seal 6 to the slider 4, the attachment screws 32 are inserted into the attachment screw through holes 34 formed in the spacer plate 42, the cover plate 38, and the seal member 40, and the attachment screw through holes 40 formed in the end cap 14, and are threadably mounted on the attachment screw fastening holes 12a of the slider body 12.

Furthermore, as illustrated in FIG. 8, the linear guide device according to the first embodiment includes a space (side seal-side space) 52 between the side seal 6 and the guide rail 2, which communicates with a gap C formed between the slider 4 and the rail-side rolling surface 10. The side seal-side space 52 mainly formed by the space forming depression portion 54 of the spacer plate 42, the seal member 40 and the rail-side rolling surface 10. Furthermore, the side seal-side space 52 is arranged to be closer to the slider 4 than the seal lip 48.

It is to be noted that the space forming depression portion 54 of the spacer plate 42 is formed in the same shape as that of the lip member fitting depression portion 50 included in the seal plate body 46, as mentioned above.

Furthermore, the spacer plate 42 and the seal plate body 46 made of material with low flexibility suppress the deformation of the side-seal-side space 52 in the movement direction of the slider 4.

In this situation, during use of the linear guide device, the lubricant extruded from the rolling element circulation passage by the rolling elements 8 moves into the side-seal-side space 52 via the gap C, as the slider 4 moves. Furthermore, the lubricant may be poured in the side-seal-side space 52, when assembling the linear guide device.

Therefore, there is the lubricant in the side-seal-side space 52 during use of the linear guide device. Furthermore, the amount of the lubricant in the side-seal-side space 52 returning to the rolling element circulation passage via the gap C during use of the linear guide device is dependent on the volume of the side-seal-side space 52 and the length L of the side-seal-side space 52 in the movement direction of the slider 4.

In the linear guide device according to the first embodiment, the volume of the side-seal-side space 52 and the length L of the side-seal-side space 52 in the movement direction of the slider 4 are set to "values in which the lubricant in the side-seal-side space 52 can return to the gap C as the slider 4 moves when using the linear guide device".

The gap C and the length L may be set to be within the following range.
0,3mm ≤ C ≤ 0.5mm
1mm ≤ L ≤ 5mm

When the length L is set to be smaller than 1 mm, it is hard to move the lubricant between the side-seal-side space 52 and the gap C. Furthermore, when length L exceeds 5mm, the side-seal-side space 52 gets too large, and the linear guide device gets larger in size.

It is to be noted that the gap C and the length L are not limited to the above mentioned values.

Next, the operation of the linear guide device according to the first embodiment will be described based on FIG. 8.

In the linear guide device according to the first embodiment, the slider 4 moves relative to the guide rail 2 via the plural rolling elements 8 rolling (moving while rotating) in the rolling element circulation passage, At this time, the seal lip 48 of the side seal 6 slides while being in contact with the outer surface of the guide rail 2 including the rail-side rolling surface 10.

As mentioned above, although the lubricant is disposed in the rolling element circulation passage, when the lubricant in the rolling element circulation passage reduces or degrades during use (operation) of the linear guide device, the operation performance of the linear guide device decreases. Therefore, in order to suppress the operation performance decrement of the linear guide device, it is necessary to supply a new lubricant into the rolling element circulation passage periodically.

Then, immediately after supplying the lubricant or the like, there is an excess lubricant in the rolling element circulation passage. In this situation, the excess lubricant in the rolling element circulation passage is extruded by the rolling elements 8 from the gap C formed between the slider 4 and the rail-side rolling surface 10 as the slider 4 moves. At this time, in the linear guide device according to the first embodiment, the lubricant extruded from the gap C moves to the side-seal-side space 52, as illustrated by the dashed line in FIG. 8

It is to be noted that the dashed line indicates the moving path of the lubricant when the slider 4 moves in the direction indicated by the arrow B in FIG. 8. That is, as the slider 4 moves in the direction indicated by the arrow B in FIG. 8, the rolling elements 8 moves in the rolling element circulation passage in the direction indicated by the arrow A in FIG. 8, and thus, the lubricant also moves in the direction indicated by the arrow A. As a result, the lubricant is extruded from the gap C to flow into the side-seal-side space 52.

Since the lubricant extruded from the gap C flows into the side-seal-side space 52 in this way, the lubricant cannot leak outside the slider 4 through between the seal lip 48 and the guide rail 2 easily.

Furthermore, the spacer plate 42 and the seal plate body 46 suppress the deformation of the side-seal-side space 52 in the movement direction of the slider 4 when using the linear guide device. Therefore, the decrease of the volume of the side-seal-side space 52 when using the linear guide device is suppressed. That is, since the deformation of the side-seal-side space 52 is suppressed, the lubricant existing in the side-seal-side space 52 cannot leak outside the slider 4 easily.

Accordingly, the linear guide device according to the first embodiment suppresses the leakage of the lubricant outside the slider 4.

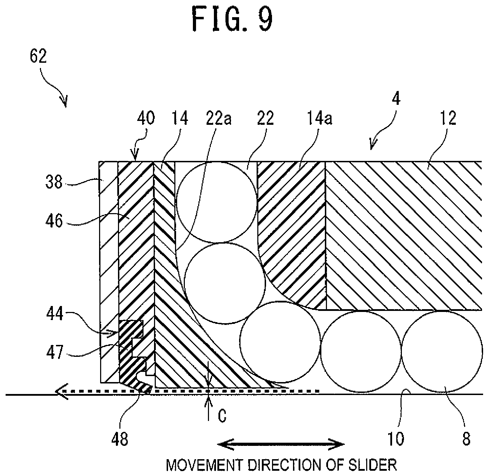

On the other hand, FIG. 9 illustrates the portion corresponding to FIG. 8 in a linear guide device as a comparative example. In this linear guide device, instead of the side seal 6 included in the linear guide device according to the first embodiment, the side seal 62 only including the seal member 40 and the cover plate 38 is fixed to the slider 4. Therefore, the linear guide device of FIG. 9 does not include the side-seal-side space 52.

Accordingly, by the lubricant extruded from the gap C formed between the slider 4 and the rail-side rolling surface 10, a pressure is applied on the seal lip 48. Then, the seal lip 48 receiving the pressure deforms and a gap is between the seal lip 48 and the guide rail 2. The lubricant leaks through the gap outside the slider 4.

As a result, the ambient environment is contaminated by the lubricant leaked outside the slider 4. The dashed line in FIG. 9 indicates the moving path of the lubricant extruded from the gap C and leaked outside the slider 4.

In contrast, the linear guide device according to the first embodiment can suppress the leakage of the lubricant outside the slider 4, as mentioned above. Thus, it is possible to suppress the contamination of the ambient environment.

Furthermore, the linear guide device according to the first embodiment can return the lubricant existing the side-seal-side space 52 to the rolling element circulation passage. Thus, the lubricant cannot dry up easily, even when the linear guide device is used over a long period. As a result, the lubrication failure cannot occur easily over a long period, and thus, it is possible to reduce the supply frequency of the lubricant.

Furthermore, in the linear guide device according to the first embodiment, since the spacer plate 42 and the seal plate body 46 have the same shape, it is possible to reduce a manufacturing cost in comparison with the case where the shapes of the spacer plate 42 and the seal plate body 46 are different from each other.

It is to be noted that, in the linear guide device according to the first embodiment, the spacer plate 42 and the seal plate body 46 suppress the deformation of the side-seal-side space 52 in the movement direction of the slider, but the present invention is not limited thereto. A plate-shaped member made of material with low flexibility similar to that of the cover plate 38, for example, may be arranged between the seal plate body 46 and the spacer plate 42, and this plate-shaped member and the spacer plate 42 may suppress the deformation of the side-seal-side space 52.

Furthermore, the linear guide device according to the first embodiment uses the cylindrical rollers for the rolling elements 8, however, steel balls or rollers other than cylindrical rollers (needle-shaped rollers or the like) may be used.

### (Second Embodiment)

In the second embodiment, instead of the side seal 61 in the linear guide device illustrated in FIG. 1 and FIG. 2, a slide seal 6A described below is fixed to the slider 4. As to the other points, the linear guide device according to the second embodiment has the same constitution as that of the commonly used linear guide device 1.

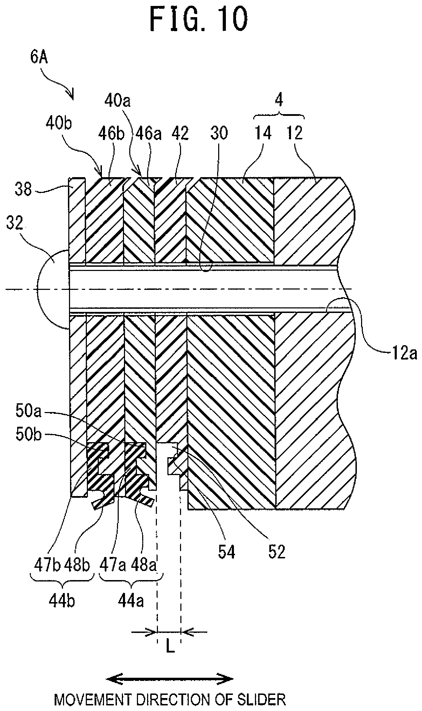

As illustrated in FIG. 10, the side seal 6A includes the cover plate 38, two seal members 40a and 40b, and the spacer plate 42. The two seal members 40a and 40b are arranged between the cover plate 38 and the spacer plate 42.

The cover plate 38 is the same as the cover plate 38 in the first embodiment. The spacer plate 42 is the same as the spacer plate 42 in the first embodiment

The first seal member 40a includes the first seal plate body 46a and the first lip member 44a. The first seal plate body 46a is the same as the seal plate body 46 in the first embodiment. The first seal plate body 46a includes a lip member fitting depression portion 50a being the same as the lip member fitting depression portion 50 in the first embodiment

The first lip member 44a is the same as the lip member 44 in the first embodiment.. The first lip member 44a includes the first fitting portion 47a and the first seal lip 48a being the same as the fitting portion 47 and the lip 48 in the first embodiment.. That is, the first seal member 40a is the same as the seal member 40 in the first embodiment illustrated in FIG. 5.

The second seal member 40b includes the second seal plate body 46b and the second lip member 44b. The second seal plate body 46b is the nearly same as the first seal plate body 46a, but has a thicker plate-thickness than that of the first seal plate body 46a. The second seal plate body 46b includes a lip member fitting depression portion 50b to which the second fitting portion 47b of the second lip member 44b is fitted.

The second lip member 44b includes the second fitting portion 47b and the second seal lip 48b. Unlike the seal lip 48 in the first embodiment, the second seal lip 48b has a shape in which a portion more distant from the slider 4 comes closer to the outer surface of the guide rail 2, in a state where the second lip member 44b is attached to the slider 4. That is, the seal lip 48 is an outwardly extending lip. As to the other points, the second lip member 44b is the same as the lip member 44 in the first embodiment.

As mentioned above, the linear guide device according to the second embodiment has a configuration in which the second seal member 40b which has the seal lip with a different extending direction is arranged between the spacer plate 42 and the seal member 40 in the linear guide device according to the first embodiment. That is, the linear guide device according to the second embodiment has the side-seal-side space 52 which is the same as that of the first embodiment, and thus, has the same operations and effects as those of the linear guide device according to the first embodiment.

Furthermore, due to the difference from the linear guide device according to the first embodiment, the linear guide device according to the second embodiment has the following operations and effects.

In the linear guide device according to the second embodiment, the second seal lip 48b which is the outwardly extending lip is arranged outside the first seal lip 48a which is the inwardly extending lip. Therefore, the effect of suppressing the entry of the foreign matter inside slider 4 is improved in comparison with the linear guide device according to the first embodiment in which the outwardly extending lip 48b is not arranged. Accordingly, the linear guide device according to the second embodiment has a long life than that of the linear guide device according to the first embodiment.

### Example not forming part of the invention

In the example, instead of he side seal 61 in the linear guide device illustrated in FIG. 1 and FIG. 2, a slide seal 6B described below is fixed to the slider 4. As to the other points, the linear guide device according to the example has the same constitution as that of the commonly used linear guide device 1.

As illustrated in FIG.. 11, the side seal 6B includes the cover plate 38, the seal member 40, and a spacer plate 42B. The cover plate 38 is the same as the cover plate 38 in the first embodiment The seal member 40 is the same as the seal member 40 in the first embodiment.

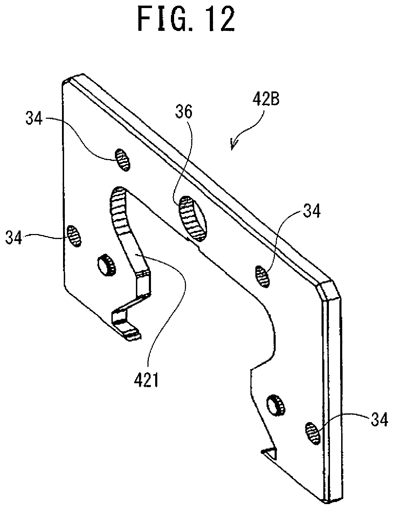

The spacer plate 42B has an inner surface 421 of a shape corresponding to the outer surface of the guide rail, as illustrated in FIG. 12. The inner surface 421 of the spacer plate 42B and the outer surface of the guide rail face with each other with a predetermined gap Furthermore, the spacer plate 42B has a shape in which a portion corresponding to the space forming depression portion 54 is cut off from the spacer plate 42 of FIG. 6. That is, the spacer plate 42B has a different shape from that of the seal plate body 46 of the seal member 40. The material of the spacer plate 42B is the same as the one of the spacer plate 42 in the first embodiment.

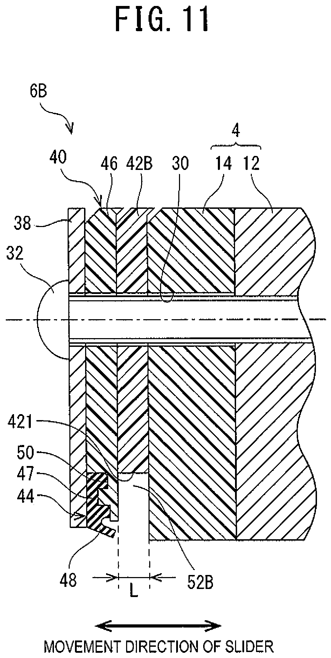

As illustrated in FIG. 11, in the linear guide device according to the example, a side seal-side space 52B is formed by the inner surface 421 of the spacer plate 42B, the seal member 40, and the side seal 14. Therefore, in the linear guide device according to the example, the volume of the side seal-side space 52B is larger than the volume of the lip member fitting depression portion 50 included in the seal member 40.

Furthermore, the end cap 14 and the seal plate body 46 made of material with low flexibility suppress the deformation of the side seal-side space 52B in the movement direction of the slider 4.

As mentioned above, in the linear guide device according to the example, in stead of the spacer plate 42 of the linear guide device according to the first embodiment, there is arranged the spacer plate 42B having the shape from which the portion corresponding to the space forming depression portion 54 is cut off. Therefore, the linear guide device according to the example has the side seal-side space 52B larger than the side-seal-side space 52 of the linear guide device according to the first embodiment, and thus, can hold more lubricant within the side seal-side space 52B in comparison with the linear guide device according to the first embodiment.

That is, since the linear guide device according to the example can hold more lubricant which is extruded from the gap C formed between the slider 4 and the rail-side rolling surface 10 within the side seal-side space 52B than the linear guide device according to the first embodiment, the lubricant cannot leak outside the slider 4 through between the seal lip 48 and the guide rail 2 easily

Accordingly, the linear guide device according to the example has a greater effect of suppressing the leakage of the lubricant outside slider and the contamination of the ambient environment, in comparison with the linear guide device according to the first embodiment.

### (Example)

In the example, instead of the side seal 61 in the linear guide device illustrated in FIG. 1 and FIG. 2, a slide seal 6C described below is fixed to the slider 4. As to the other points, the linear guide device according to the example has the same constitution as that of the commonly used linear guide device 1.

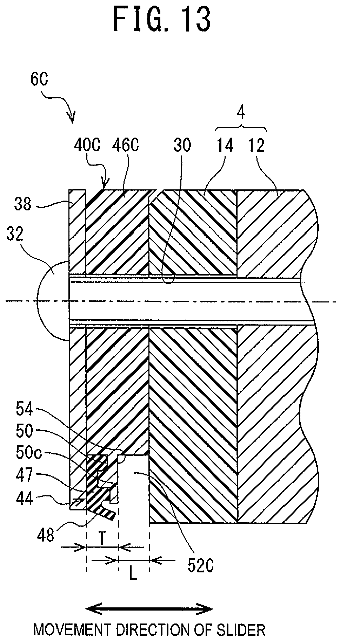

As illustrated in FIG. 13, the side seal 6C includes the cover plate 38 and a seal member 40C, and does not include a spacer plate. The cover plate 38 is the same as the cover plate 38 in the first embodiment. The seal member 40C includes a seal plate body 46C and a lip member 44. The lip member 44 is the same as the lip member 44 in the first embodiment

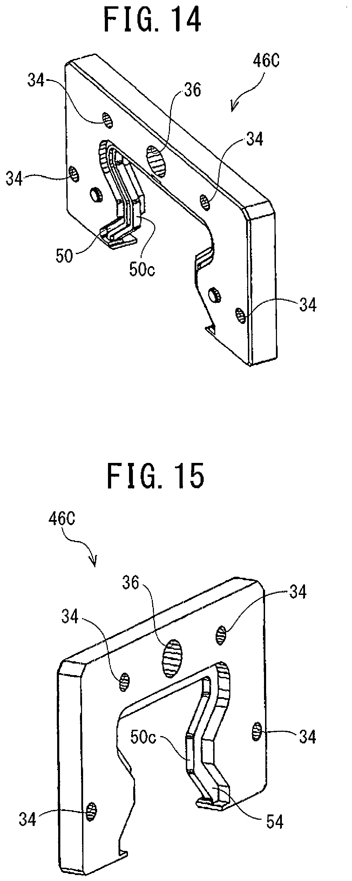

In the seal plate body 46C, the lip member fitting depression portion 50 is formed on the face arranged at the cover plate 38 side, and the space forming depression portion 54 is formed on the face arranged at the end cap 14 side, as illustrated in FIG. 14 and FIG 15. The lip member fitting depression portion 50 and the space forming depression portion 54 are formed such that there is a projecting portion 50c therebetween.

The lip member fitting depression portion 50 with the same shape as that of the seal member 40 in the first embodiment is formed on one face of the projecting portion 50c. The other face of the projecting portion 50c is flat to form a bottom face of the space forming depression portion 54. The material of the seal plate body 46C is the same as that of the seal plate body 46 in the first embodiment.

As illustrated in FIG. 13, the space forming depression portion 54 is formed to have a thickness half that of the seal plate body 46C. That is, when it is assumed in FIG. 13 that the distance between the face the projecting portion 50c at the end cap 14 side and the face of the seal plate body 46C at the cover plate 38 side is T, T = L. Therefore, the volume of the space forming depression portion 54 is larger than the volume of the lip member fitting depression portion 50

Furthermore, the end cap 14 and the seal plate body 46 made of material with low flexibility suppress the deformation of the side-seal-side space 52 in the movement direction of the slider 4.

As mentioned above, in the linear guide device according to the example, instead of the seal member 40 and the spacer plate 42 in the linear guide device according to the first embodiment, the seal member 40C having both of the lip member fitting depression portion 50 and the space forming depression portion 54 is arranged, and the volume of the space forming depression portion 54 is lager than the volume of the lip member fitting depression portion 50.

Therefore, the linear guide device according to the example has the side seal-side space 52C larger than the side-seal-side space 52 of the linear guide device according to the first embodiment. Accordingly, the linear guide device according to the example can hold more lubricant with in the side seal-side space 52C in comparison with the linear guide device according to the first embodiment.

That is, since the linear guide device according to the example can hold more lubricant which is extruded from the gap C formed between the slider 4 and the rail-side rolling surface 10 within the side seal-side space 52C than the linear guide device according to the first embodiment, the lubricant cannot leak outside the slider 4 through between the seal lip 48 and the guide rail 2 easily.

Accordingly, the linear guide device according to the example has a greater effect of suppressing the leakage of the lubricant outside slider and the contamination of the ambient environment, in comparison with the linear guide device according to the first embodiment.

Furthermore, the number of the components of the side seal 6C used in the example is smaller than those of the side seal 6 used in the first embodiment, the side seal 6A used in the second embodiment, and the side seal 6B used in the other example before. Accordingly, the linear guide device according to the example can reduce a manufacturing cost and an assembling process, in comparison with the linear guide devices according the first, the second, and the other example before.

### Reference Signs List

1 linear guide device
2 guide rail
4 slider
6 side seal
6A side seal
6B side seal
6C side seal
8 rolling element
10 rail-side rolling surface
12 slider body
12a attachment screw fastening hole
14 end cap
14a return guide
16 slider-side rolling surface
18 rolling element return passage
20 loaded rolling channel
22 direction change passage
22a direction change passage depression portion
24 oil supply opening
26 oil passage
28 both leg portions
30 attachment screw through hole
32 attachment screw
34 attachment screw through hole
36 oil supply through hole
38 cover plate
40 seal member
40a first seal member
40b second seal member
40C seal member
42 spacer plate
42B spacer plate
421 inner surface of spacer plate
44 lip member
44a first lip member
44b second lip member
46 seal plate body
46a first seal plate body
46b second seal plate body
46C seal plate body
47 fitting portion
47a first fitting portion
47b second fitting portion
48 seal lip
48a first seal lip
48b second seal lip
50 lip member fitting depression portion
50a first lip member fitting depression portion
50b second lip member fitting depression portion
50c projecting portion
52 side-seal-side space
52B side-seal-side space
52C side-seal-side space
54 space forming depression portion
61 side seal
62 side seal
C gap formed between slider and rail-side rolling surface
L length of side-seal-side space in movement direction of slider

## Claims

1. A linear guide device (1) comprising:
a guide rail (2);
a slider (4); and
a plurality of rolling elements (8), wherein
the guide rail (2) and the slider (4) include rolling surfaces (10, 16), respectively, at positions facing with each other, the rolling surfaces (10, 16) forming a rolling channel for the plurality of rolling elements (8) and extending in a longitudinal direction of the guide rail (2),
the slider (4) is arranged on the guide rail (2) via the plurality of rolling elements (8) in a manner able to move relatively in the longitudinal direction,
side seals (6, 6A, 6B, 6C) are attached to both end sides of the slider (4) in a movement direction,
each of the side seals (6, 6A, 6B, 6C) includes a seal member (40, 40A, 40B, 40C) including a seal lip (48) in contact with an outer surface including a rail-side rolling surface (10) which is the rolling surface of the guide rail (2), in a slidable manner,
a side seal-side space (52, 52B, 52C) is arranged to be closer to the slider (4) than the seal lip and communicates with a gap (C) formed between the slider and the rail-side rolling surface (10),
deformation of the side seal-side space (52, 52B, 52C) in the movement direction of the slider (4) is suppressed,
**characterized in that**
the side seal (6, 6A, 6B, 6C) includes a spacer plate (42) including a space forming depression portion (54) forming the side seal-side space (52, 52B, 52C), and
the spacer plate (42) is interposed between the seal member (40, 40a, 40b, 40c) and the slider (4).

2. The linear guide device (1) according to claim 1, wherein
the side seal (6, 6A, 6B, 6C) includes a plurality of seal members (40, 40a, 40b, 40c), each of which includes the seal lip, and
the plurality of seal members (40, 40a, 40b, 40c) are arranged in the movement direction of the slider (4).

3. The linear guide device (1) according to claim 1, wherein
the seal member (40, 40a, 40b, 40c) includes a lip member (44) on which the seal lip (48) is formed, and a seal plate body (46) on which a lip member fitting depression portion (50) fitting to the lip member (44) is formed, andthe spacer plate (42) has the same shape as a shape of the seal plate body (46).

4. The linear guide device (1) according to claim 1, wherein
the side seal (6, 6A, 6B, 6C) includes a seal member (40, 40a, 40b, 40c) including the seal lip (48),
the seal member (40, 40a, 40b, 40c) includes a lip member (44) on which the seal lip (48) is formed, and a seal plate body (46) on which a lip member fitting depression portion (50) fitting to the lip member (44) is formed, and
a volume of the side seal-side space (52, 52B, 52C) is larger than a volume of the lip member fitting depression portion (50).

5. The linear guide device (1) according to claim 1, wherein
the side seal (6, 6A, 6B, 6C) includes a seal member (40, 40a, 40b, 40c) including the seal lip (48), and
the seal member (40, 40a, 40b, 40c) including a space forming depression portion (54) forming the side seal-side space (52, 52B, 52C).

6. The linear guide device (1) according to any one of claims 1 to 5, wherein at least any one of a volume of the side seal-side space (52, 52B, 52C) or a length of the side seal-side space (52, 52B, 52C) in the movement direction of the slider (4) is set to a value in which a lubricant disposed in the side seal-side space (52, 52B, 52C) can move to the gap (C) formed between the slider (4) and the rail-side rolling surface (10) by a relative movement between the guide rail (2) and the slider (4).

## Patentansprüche

1. Linearführungsvorrichtung (1), umfassend:
eine Führungsschiene (2);
ein Gleitstück (4); und
mehrere Wälzelemente (8), wobei
die Führungsschiene (2) und das Gleitstück (4) Wälzoberflächen (10, 16) jeweils an Positionen enthalten, die aufeinander weisen, wobei die Wälzoberflächen (10, 16) einen Wälzkanal für die mehreren Wälzelemente (8) ausbilden und sich in einer Längsrichtung der Führungsschiene (2) erstrecken, wobei
das Gleitstück (4) auf der Führungsschiene (2) über die mehreren Wälzelemente (8) in einer zur Relativbewegung in der longitudinalen Richtung fähigen Weise angeordnet ist,
die Seitendichtungen (6, 6A, 6B, 6C) an beiden Endseiten des Gleitstücks (4) in der Bewegungsrichtung angebracht sind,
jede Seitendichtungen (6, 6A, 6B, 6C) ein Dichtungselement (40, 40A, 40B, 40C) enthält, enthaltend eine Dichtungslippe (48) in Kontakt mit einer Außenoberfläche in gleitfähiger Weise, die eine schienenseitige Wälzoberfläche (10) enthält, welche die Wälzoberfläche der Führungsschiene (2) ist,
ein seitlicher Dichtungsseitenraum (52, 52B, 52C), dahingehend angeordnet ist, dem Gleitstück (4) näher zu sein als die Dichtungslippe und mit einem Spalt (C) zu kommunizieren, welcher zwischen dem Gleitstück und der schienenseitigen Wälzoberfläche (10) ausgebildet ist,
Deformation des Seitendichtungsseitenraums (52B, 52C) in der Bewegungsrichtung des Gleitstücks (4) unterdrückt ist,
**dadurch gekennzeichnet, dass**
die Seitendichtung (6, 6A, 6B, 6C) eine Beabstandungsplatte enthält, welche einen Raum enthält, der einen Vertiefungsabschnitt (54) ausbildet, welcher den Seitendichtungsseitenraum (52, 52B, 52C) ausbildet und
die Beabstandungsplatte zwischen dem Dichtungselement (40, 40a, 40b, 40c) und dem Gleitstück (4) angeordnet ist.

2. Linearführungsvorrichtung (1) nach Anspruch 1, wobei
die Seitendichtung (6, 6A, 6B, 6C) mehrere Dichtungselemente (40, 40a, 40b, 40c) enthält, welche alle die Dichtungslippe enthalten, und
die mehreren Dichtungselemente (40, 40a, 40b, 40c) in der Bewegungsrichtung des Gleitstücks (4) angeordnet sind.

3. Linearführungsvorrichtung (1) nach Anspruch 1, wobei
das Dichtungselement (40, 40a, 40b, 40c) ein Lippenelement (44) enthält, auf welchem die Dichtungslippe (48) ausgebildet ist, und einen Dichtungsplattenkörper (46), auf welchem ein Lippenelement-Passvertiefungsabschnitt (50), welcher zu dem Lippenelement (44) passt, ausgebildet ist, und
die Beabstandungsplatte (42), die gleiche Form wie die Form des Dichtungsplattenkörpers (46) aufweist.

4. Linearführungsvorrichtung (1) nach Anspruch 1, wobei
die Seitendichtung (6, 6A, 6B, 6C) ein Dichtungselement (40, 40a, 40b, 40c) enthält, welches die Dichtungslippe (48) enthält,
das Dichtungselement (40, 40a, 40b, 40c) ein Lippenelement (44) enthält, auf welchem die Dichtungslippe (48) ausgebildet ist, und einen Dichtungsplattenkörper (46), auf welchem ein Lippenelement-Passvertiefungsabschnitt (50), der zu dem Lippenelement (44) passt, ausgebildet ist, und
ein Volumen des Seitendichtungsseitenraums (52, 52B, 52C) größer als ein Volumen des Lippenelement-Passvertiefungsabschnitts (50) ist.

5. Linearführungsvorrichtung (1) nach Anspruch 1, wobei
die Seitendichtung (6, 6A, 6B, 6C) ein die Dichtungslippe (48) enthaltendes Dichtungselement (40, 40a, 40b, 40c) enthält, und
ein Dichtungselement (40, 40a, 40b, 40c) enthaltend einen raumbildenden Vertiefungsabschnitt (54), welcher den Seitendichtungsseitenraum (52, 52B, 52C) ausbildet.

6. Linearführungsvorrichtung (1) nach irgendeinem der Ansprüche 1 bis 5, wobei zumindest irgendeines von einem Volumen des Seitendichtungsseitenraums (52, 52B, 52C) oder einer Länge des Seitendichtungsseitenraums (52, 52B, 52C) in der Bewegungsrichtung des Gleitstücks auf einen Wert gesetzt ist, in welchem ein in dem Seitendichtungsseitenraum (52, 52B, 52C) angeordnetes Schmiermittel sich zu dem Spalt (C) durch eine Relativbewegung zwischen der Führungsschiene (2) und dem Gleitstück (4) bewegen kann, der zwischen dem Gleitstück (4) und der schienenseitigen Wälzoberfläche (10) ausgebildet ist.

## Revendications

1. Dispositif de guidage linéaire (1) comprenant :
un rail de guidage (2) ;
un coulisseau (4) ; et
une pluralité d'éléments de roulement (8), dans lequel
le rail de guidage (2) et le coulisseau (4) comportent des surfaces de roulement (10, 16), respectivement, à des positions se faisant face, les surfaces de roulement (10, 16) formant un canal de roulement pour la pluralité d'éléments de roulement (8) et s'étendant dans la direction longitudinale du rail de guidage (2),
le coulisseau (4) est agencé sur le rail de guidage (2) par l'intermédiaire de la pluralité d'éléments de roulement (8) de manière à être apte à se déplacer relativement dans la direction longitudinale,
des joints latéraux (6, 6A, 6B, 6C) sont fixés aux deux côtés d'extrémité du coulisseau (4) dans une direction de déplacement,
chacun des joints latéraux (6, 6A, 6B, 6C) comporte un organe de joint (40, 40A, 40B, 40C) comportant une lèvre de joint (48) en contact avec une surface externe comportant une surface de roulement côté rail (10) qui est la surface de roulement du rail de guidage (2), de manière coulissante,
un espace côté joint latéral (52, 52B, 52C) est agencé pour être plus proche du coulisseau (4) que la lèvre de joint et communique avec un entrefer (C) formé entre le coulisseau et la surface de roulement côté rail (10),
la déformation de l'espace côté joint latéral (52, 52B, 52C) dans la direction de déplacement du coulisseau (4) est supprimée,
**caractérisé en ce que**
le joint latéral (6, 6A, 6B, 6C) comporte une plaque d'espacement (42) comportant une partie de dépression formant un espace (54) formant l'espace côté joint latéral (52, 52B, 52C), et
la plaque d'espacement (42) est interposée entre l'organe de joint (40, 40a, 40b, 40c) et le coulisseau (4).

2. Dispositif de guidage linéaire (1) selon la revendication 1, dans lequel
le joint latéral (6, 6A, 6B, 6C) comporte une pluralité d'organes de joint (40, 40a, 40b, 40c), dont chacun comporte la lèvre de joint, et
la pluralité d'organes de joint (40, 40a, 40b, 40c) est agencée dans la direction de déplacement du coulisseau (4).

3. Dispositif de guidage linéaire (1) selon la revendication 1, dans lequel
l'organe de joint (40, 40a, 40b, 40c) comporte un organe de lèvre (44) sur lequel est formée la lèvre de joint (48), et un corps de plaque de joint (46) sur lequel est formée une partie de dépression d'ajustement d'organe de lèvre (50) s'ajustant sur l'organe de lèvre (44), et
la plaque d'espacement (42) a la même forme qu'une forme du corps de plaque de joint (46).

4. Dispositif de guidage linéaire (1) selon la revendication 1, dans lequel
le joint latéral (6, 6A, 6B, 6C) comporte un organe de joint (40, 40a, 40b, 40c) comportant la lèvre de joint (48),
l'organe de joint (40, 40a, 40b, 40c) comporte un organe de lèvre (44) sur lequel est formée la lèvre de joint (48), et un corps de plaque de joint (46) sur lequel est formée une partie de dépression d'ajustement d'organe de lèvre (50) s'ajustant sur l'organe de lèvre (44), et
un volume de l'espace côté joint latéral (52, 52B, 52C) est plus grand qu'un volume de la partie de dépression d'ajustement d'organe de lèvre (50).

5. Dispositif de guidage linéaire (1) selon la revendication 1, dans lequel
le joint latéral (6, 6A, 6B, 6C) comporte un organe de joint (40, 40a, 40b, 40c) comportant la lèvre de joint (48), et
l'organe de joint (40, 40a, 40b, 40c) comportant une partie de dépression de formation d'espace (54) formant l'espace côté joint latéral (52, 52B, 52C).

6. Dispositif de guidage linéaire (1) selon l'une quelconque des revendications 1 à 5, dans lequel au moins l'un quelconque parmi un volume de l'espace côté joint latéral (52, 52B, 52C) et une longueur de l'espace côté joint latéral (52, 52B, 52C) dans la direction de déplacement du coulisseau (4) est défini à une valeur à laquelle un lubrifiant disposé dans l'espace côté joint latéral (52, 52B, 52C) peut se déplacer vers l'entrefer (C) formé entre le coulisseau (4) et la surface de roulement côté rail (10) par un déplacement relatif entre le rail de guidage (2) et le coulisseau (4).
